# EUROPEAN PATENT APPLICATION

(11) **EP 2 535 103 A1**
(43) Date of publication of application: **19.12.2012**
(21) Application number: 11169818.9
(22) Date of filing: 14.06.2011
(51) Int. Cl.: B01D 69/00, B01D 71/80, B01D 67/00, B01D 69/14, B01D 39/16, D01D 5/00, D04H 1/728

(54) **Biofunctionalized microfiltration or ultrafiltration membrane**

(71) Applicant: Helmholtz-Zentrum Geesthacht Zentrum für Material- und Küstenforschung GmbH, 21502 Geesthacht (DE)
(72) Inventor: ELBAHRI, Mady, 24145 Kiel (DE); HOMAEIGOHAR, Seyed Shahin, 21502 Geesthacht (DE); DAI, Tianhe, 20539 Hamburg (DE); ABDELAZIZ, Ramzy, 24143 Kiel (DE)

(57) **Abstract**

The invention relates to a membrane for the microfiltration or ultrafiltration of liquid fluids, in particular for the microfiltration or ultrafiltration of water or for the filtration of nanoparticles containing fluids. The membrane is characterized in that the membrane comprises, in particular electrospun, nanofibers, wherein the nanofibers are functionalized with proteins.

Moreover, the invention relates to a method for producing a membrane for the microfiltration or ultrafiltration of liquid fluids, in particular for the microfiltration or ultrafiltration of water or for the filtration of nanoparticles containing fluids. Furthermore, the invention relates to a use of a microfiltration or ultrafiltration membrane.

## Description

The invention relates to a membrane for the microfiltration or ultrafiltration of liquid fluids, in particular for the microfiltration or ultrafiltration of water or for the filtration of nanoparticles containing fluids. Moreover, the invention relates to a method for producing a membrane for the microfiltration or ultrafiltration of liquid fluids, in particular for the microfiltration or ultrafiltration of water or for the filtration of nanoparticles containing fluids. Furthermore, the invention relates to a use of a microfiltration or ultrafiltration membrane.

Electrospinning has been recognized as an efficient processing method to manufacture nanoscale fibrous structures. This technique is known within the fiber forming industry as electrostatic spinning of liquids and/or solutions capable of forming fibers. Electrospinning of fibers is well known and has been described in numerous patents and also in the general literature.

The electrospinning process deals with the creation of an electrical field at the surface of a liquid. The resulting electrical forces create a jet of liquid which carries electrical charge. These electrically charged jets of liquid travel to a grounded collector which acts as the opposite electrode. The liquid jet while travelling to the collector is highly stretched and elongated. Simultaneously, evaporation of solvent from the jet makes it solid as nanofibers collecting on the collector (Z.M. Huang et al., Composites Science and Technology 2003, 63, 2223-2253).

Electrospun nanofibrous mats are highly porous with interconnected pores in the size range of only a few times to a few ten times the fiber diameter. The promising structural features make them strong candidates for filtration applications. The high porosity implies a higher permeability and the interconnected pores can withstand fouling better.

Furthermore, the small pore size of the nanofibrous non-wovens results in a higher retention (C. Burger et al., Annu. Rev. Mater. Res. 2006, 36, 333-368). Despite promising filtration features, an electrospun membrane possesses a very high porosity and surface area to volume ratio which makes it more exposed to mechanical stresses applied while filtration. Moreover, the high surface area in case of using a hydrophobic membrane material can lower the wettability of the membrane and increase its fouling tendency.

Moreover it is known in the prior art that electrospun nanofibrous membranes (ENMs) have promising properties for e.g. water filtration. However, due to their relatively bigger pore size, electrospun nanofibrous membranes have been mainly used as a microfiltration (MF) membrane able to capture only coarse particles from water streams (Homaeigohar et al., Journal of Membrane Science 365 (2010), pp. 68-77; R. Gopal, Journal of Membrane Science 289, (2007), pp. 210-219).

Furthermore the scientific publications by C. Shin, Colloids and Surfaces A-Physicochemical and Engineering Aspects 262, 2005, pp. 211-215 as well as by R. Gopal, Journal of Membrane Science 281 (2006), pp. 581-586 and Homaeigohar et al., Journal of Membrane Science 365 (2010), pp. 68-77, disclose the removal of particles from water streams using electrospun nanofibers on size discrimination i.e. filtration.

Membrane technology is important for the treatment of water in general and especially for the pre-treatment of drinking water. The membrane separation processes demand a high selectivity, low energy consumption, a moderate cost to performance ratio and compact modular design. On the other hand, membrane systems used for water treatment suffer from fouling which hampers their applications. Fouling leads to a higher pressure drop over the membrane elements disturbing flow distribution in the feed channel. Due to the operational conditions in the membrane installations, it is important to reduce and prevent fouling as efficiently as possible.

Nowadays, water pre-treatment as separation of micron to submicron particulate contaminants is extensively being paid attention in water purification. Pre-treatment minimizes the risk of fouling of the downstream filter unit and maintain its performance for a much longer time before cleaning and/or replacement (D. Aussawasathien et al., Journal of Membrane Science 315 (2008), pp. 11-19).

It is an object of the invention to provide an improved microfiltration or ultrafiltration membrane for pressure driven membrane separation processes, in particular for the filtration and/or the (pre-)treatment of water, and to improve pressure driven membrane filtration processes.

This object is solved through a membrane for the microfiltration or ultrafiltration of liquid fluids, in particular for the microfiltration or ultrafiltration of water or for the filtration of nanoparticles containing fluids, characterized in that the membrane comprises, in particular electrospun, nanofibers, wherein the nanofibers are functionalized with proteins.

The invention is based on the idea that the nanofibers of an electrospun nanofibrous membrane are functionalized, preferably crosslinked, by proteins in order to provide an efficient membrane for pressure driven membrane processes like microfiltration or ultrafiltration. Therefore the functionalized membrane is well-suited for the pre-treatment of liquids for example water.

Microfiltration is characterized by a membrane pore size between 0.1 pm and 10 pm, typically at operating pressures below 2 bar, and ultrafiltration is characterized by a membrane pore size between 1 nm and 0.1 pm, typically at operating pressures between 1 bar and 5 bar. Above all, nanofiltration is characterized by a membrane pore size between 0.5 nm and 2 nm, typically at operating pressures between 5 bar and 40 bar.

For instance the membranes according to the invention show an improved or extraordinary retention capacity for nanofluid filtration in comparison to non-functionalized membranes, wherein nanofluid is a fluid containing nanometer-sized particles, called nanoparticles with a size below 100 nm.

By using the protein functionalized membranes it is possible to remove coarse and very small particles through filtration and additionally through adsorption, wherein the adsorbed particles are deposited on the surface of the nanofibers of the electrospun nanofibrous membranes (ENMs).

Therefore the electrospun nanofibrous membranes have a higher rejection efficiency of particles by both separation processes i.e. filtration and adsorption. The functionalization of the surface of the nanofibers, e.g. protein immobilization, leads to a smaller diameter of the pores and a higher surface area of the membrane, offering a high capacity for adsorption and rejection of nanoparticles.

Thus, the electrospun nanofibrous membranes are an efficient pre-filter meeting both the water pre-treatment mechanisms i.e. filtration and adsorption. Their efficiencies derive from their small pore size in the range of microfiltration (MF) and their extraordinary surface area. The pore size of electrospun nanofibrous membranes makes them efficient in removal of relatively coarse particles and suspended solids. Additionally, the functionalized nanofibers are able to reject tiny substances such as nanoparticles with size below 100 nm (nanometer) wherein their removal normally requires very small pores of ultrafiltration (UF) or nanofiltration (NF) water membranes.

Moreover the electrospun nanofibrous membranes according to the invention provide a superhydrophilic electrospun nanofibrous membrane with an enhanced water filtration resistance and a much lower fouling tendency through the protein-functionalization of the electrospun nanofibers in comparison to electrospun nanofibrous membranes without protein-functionalized nanofibers.

Besides, the electrospun nanofibrous membrane for (pre-)treatment of water is mechanically reinforced by the proteins induced cross-linking of the nanofibers, which is more beneficial in term of low brittleness compared to chemical cross linking approaches using e.g. ammonia as the cross linking agent. Furthermore the wettability of the nanofibers or the electrospun nanofibrous membrane is also enhanced.

Advantageously, through immobilization of proteins onto the electrospun nanofibrous membrane, a microfiltration or ultrafiltration membrane is developed with an optimum retention capacity, improved mechanical properties, wettability and permeability, which are useful for example for an efficient water pre-treatment process. In addition, in case of filtration of a nanofluid containing metal nanoparticles with catalytic activity, a hybrid metal-polymer nanofibrous membrane is achieved which is beneficial in catalytic applications e.g. for minimizing biofouling. Depending on the type of the nanoparticle used, other applications ranging from antibacterial to photonic and electronic applications are possible or conceivable within the scope of the instant invention.

In a preferred embodiment of the membrane it is suggested that the nanofibers are provided with, in particular metal or ceramic or polymeric, nanoparticles with a size below 250 nm (nanometers), in particular below 100 nm (nanometers), on the surface of the nanofibers. Hereby the electrospun nanofibrous membrane with the protein-functionalized nanofibers is further or a second time functionalized by the nanoparticles through the adsorption of the, preferably metal, nanoparticles on the surface of the nanofibers, wherein a metal-polymer hybrid structure of the membrane is created or achieved with a high degree of uniform dispersion of the metal nanoparticles.

In order to functionalize the electrospun nanofibrous and protein-functionalized membrane a second time, the electrospun nanofibrous membrane is used for a filtration process wherein the fluid or the nanofluid to be microfiltered or ultrafiltered contains the functionalizing nanoparticles. Within the scope of the invention metallic or metal nanoparticles as well as other kind of nanoparticles including ceramic or polymeric ones can also be used for the nanoparticle functionalization by adsorption of the nanoparticles on the surface of the nanofibers. Therefore, a double functionalized membrane is achieved with a well dispersed nanoparticulate hybrid structure without agglomeration through a filtration process.

Thus a microfiltration or ultrafiltration membrane, based on protein functionalized electrospun nanofibers, with a retention capacity more than 50 % and up to 100% for very tiny suspended solids with size below 100 nm in a fluid to be filtered is provided for further applications and installations.

Preferably the nanoparticles are metal nanoparticles, in particular gold (Au) nanoparticles or silver (Ag) nanoparticles.

Furthermore it is beneficial, if the nanofibers of the electrospun nanofibrous membrane (ENM) are immobilized by the, in particular cross-linking, proteins.

In particular it is advantageous, if the nanofibers are made of Poly(acrylonitrile-co-glycidyl methacrylate) (PANGMA). Poly(acrylonitrile-co-glycidyl methacrylate) (PANGMA) as a polymeric material is a copolymer of acrylonitrile (AN) and glycidyl methacrylate (GMA). This polymer is chemically stable from the sturdy backbone of polyacrylonitrile, wherein glycidyl methacrylate provides a reacting ability from the free and active epoxy group of glycidyl methacrylate (GMA). The epoxy group offers the opportunities in a variety of activation/coupling chemistries for the covalent binding of captures.

In order to functionalize the nanofibers, in particular made of PANGMA, it is preferred that the proteins are serum albumin proteins, in particular bovine serum albumin (BSA). So, according to the invention, functionalization of the nanofibers is based on an (extremely) simple epoxy-amino reaction between the amine groups on BSA and the epoxy groups on PANGMA. Within the scope of the invention, some of the epoxides of the PANGMA graft chains can be converted into a particular functional group for enhancement of specific adsorption of a target protein, and the residual epoxides can be reacted with water to produce diol groups for reduction of nonselective adsorption of the proteins and induce a superhydrophilicity of the functionalized nanofibrous membrane.

Preferably, the diameter, in particular the average diameter, of the nanofibers of the membrane is between 50 nm and 800 nm, in particular between 100 nm to 650 nm.

Above all, the object is solved by a method for producing a membrane for the microfiltration or ultrafiltration of liquid fluids, in particular for the microfiltration or ultrafiltration of water or for the filtration of nanoparticles containing fluids, with the following steps:
a) providing a polymer solution comprising at least one polymer,
b) producing electrospun nanofibers by the use of an electrospinning device on the basis of the polymer solution
c) producing a membrane, in particular a material selective layer of the microfiltration or ultrafiltration membrane, from the electrospun nanofibers
d) functionalizing the nanofibers of the membrane with proteins.

Furthermore, it is preferred in the development of the method that the nanofibers are provided with, in particular metal or ceramic or polymeric, nanoparticles with a size below 250 nm (nanometers), in particular below 100 nm, on the surface of the nanofibers, wherein in particular the nanoparticles are gold (Au) nanoparticles. Thus, nanoparticulate hybrid structures of the membrane for the use in filtration processes are achieved. Via a filtration process of a metal nanoparticle containing nanofluid, the rejected metal nanoparticles reside uniformly on the surface of the nanofibers creating a polymer-metal hybrid structure useful for some further advanced applications.

Moreover it is advantageous according to a preferred mode of the method that the polymer solution for the electrospinning process comprises one, in particular aprotic, solvent, in particular Dimethylformamide (DMF), and one polymer, in particular Poly(acrylonitrile-co-glycidyl methacrylate) (PANGMA), wherein in particular the concentration of the polymer in the polymer solution is between 5 wt % (weight %) and 50 wt %.

Especially it is further beneficial, if for functionalization of the nanofibers of the membrane the membrane is immersed into a protein containing buffer solution, in particular a serum albumin protein buffer solution or a bovine serum albumin (BSA) buffer solution, wherein in particular the buffer solution contains phosphate buffered saline (PBS).

Above all, the method is further characterized in that the membrane is immersed into a protein containing buffer solution for a duration of at least 1 hour, in particular for a duration between 1 h and at least 36 h, wherein afterwards the membrane is washed with a washing solution, in particular phosphate buffered saline (PBS) containing buffer solution and/or water, in particular deionized water.

Additionally, according to a further preferred step the method is characterized in that after washing the membrane the protein functionalized membrane is dried, in particular for at least 1 hour (1 h), further in particular between 1 h and at least 36 h, and in particular at a temperature between 20°C and 50°C.

Furthermore the object of the invention is solved by the use of a microfiltration or ultrafiltration membrane of liquid fluids, in particular for the microfiltration or ultrafiltration of water or for the filtration of nanoparticles containing fluids, with a membrane according to the above description and/or a membrane obtainable according to the above mentioned method or by carrying out the above-mentioned method steps.

According to the invention a protein-functionalized nanofiber hybrid membrane for rejection of metal nanoparticles from water streams is provided, wherein proteins like BSA (bovine serum albumin) are immobilized on the surface of electrospun nanofibers containing an epoxy group like PANGMA in order to enhance the retention capacity of the membrane. The high rejection efficiency for metal nanoparticles is derived from the existence of strong protein-metal nanoparticle interactions such as ionic interaction, hydrogen bonding, Van der Waals and hydrophilic interactions.

Moreover, bovine serum albumin (BSA) crosslinks the nanofibers thereby strengthen the membrane, so that the electrospun nanofibrous membranes (ENMs) are transformed from a hydrophobic membrane to a superhydrophilic one. The combination of high mechanical stability and wettability results in a higher permeability for the ENM.

Preferably the nanofibers of the functionalized filtration membranes made of PANGMA have an (average) diameter of about 600 nm. The immobilization of proteins like BSA onto surface the nanofibers is based on ring opening of epoxides of PANGMA by heating and immersion of PANGMA nanofibers in a BSA containing solution leading to covalent bonding between BSA and PANGMA. So, this approach is much simpler without any need to any complicated preparation chemical and/or physical reactions.

According to a preferred embodiment a BSA/PANGMA electrospun nanofibrous membrane (ENM) rejects metal nanoparticles, like gold nanoparticles, having a size of 20 nm, 40 nm and 80 nm with an efficiency around 70 %, 72.5 % and 97 %, respectively in comparison to a neat and non-functionalized PANGMA electrospun nanofibrous membrane (ENM) with a retention of only 1.5 %. Moreover, within the scope of the invention the functionalized electrospun nanofibrous membrane (ENM) is stronger than its non-functionalized counterpart in term of tensile properties due to protein induced cross linking.

Besides the functionalized electrospun nanofibrous membrane have superhydrophilic characteristic and a less fouling tendency in contrast to its non-functionalized counterpart. Further, a BSA/PANGMA electrospun nanofibrous membrane possesses higher water permeability than its non-functionalized counterpart mainly due to its higher mechanical resistance and wettability.

Further characteristics of the invention will become apparent from the description of the embodiments according to the invention together with the claims and the included drawings. Embodiments according to the invention can fulfill individual characteristics or a combination of several characteristics.

The invention is described below, without restricting the general intent of the invention, based on an exemplary embodiment.

### EXAMPLE: Preparation of neat and functionalized electrospun nanofibrous membranes

An electrospun nanofibrous membrane with nanofiber of PANGMA was prepared through immobilization of BSA proteins onto the surface of the PANGMA electrospun nanofibers.

The nanofibers of electrospun nanofibrous membranes were made via electrospinning of PANGMA under the following conditions: PANGMA concentration (20 wt.%), DMF as solvent, voltage of 15 to 20 kV, collecting plate of Aluminum foil, spinning distance of 25 cm, and feed rate of 1.1 ml/h. The obtained nanofibers were used to form or to produce a nanofibrous filtration membrane.

### Functionalization of an electrospun nanofibrous membrane

The PANGMA electrospun nanofibrous membrane was immersed into a buffer solution with BSA (bovine serum albumin) proteins and PBS (phosphate buffered saline) with the concentration of 5 mg/mL and a pH-value of 6.8. The mixture was moderately shaken at 55°C up to 24 hours. After reaction, the membrane was taken out and washed several times by PBS buffer (pH 6.8) under shaking condition until unbound BSA was completely removed.

Finally, the BSA-immobilized PANGMA electrospun nanofibrous membrane was carefully washed with deionized water again and dried under vacuum at 30°C for 24 hours.

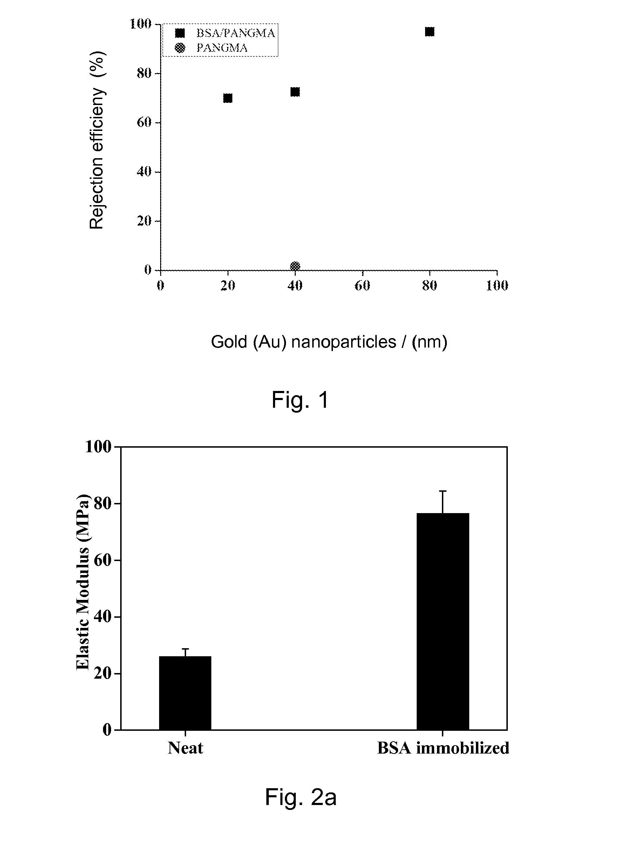

In Fig. 1 the rejection efficiency of the neat and BSA immobilized PANGMA-ENMs for gold nanoparticles are shown. As can be seen, while the non-functionalized electrospun nanofibrous membrane (ENM) separates only 1.5% of 40 nm metal or gold nanoparticles, the BSA immobilized PANGMA-ENM rejects 72.5% of this size gold nanoparticles (40 nm).

Moreover, the rejection efficiency of the BSA immobilized PANGMA-ENM for nanoparticles with a size of 20 nm is around 70 %, whereas for 80 nm gold nanoparticles the rejection efficiency is 97%. In addition to a high rejection efficiency for metal nanoparticles, protein induced cross-linking makes the electrospun nanofibrous membrane (ENM) stronger and more resistant to mechanical stresses applied while filtration.

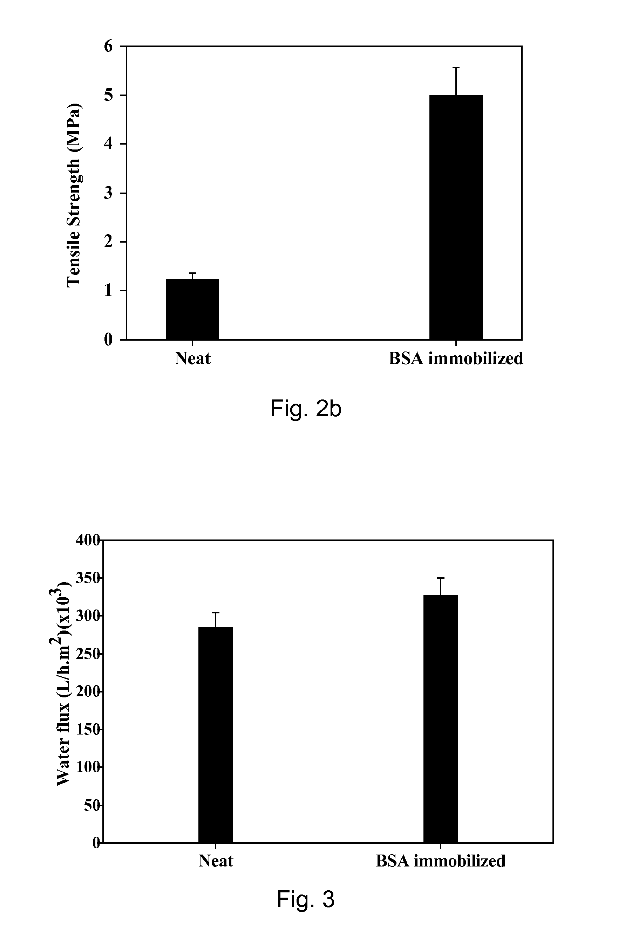

Fig. 2a shows a diagram for the elastic modulus of neat and BSA immobilized PANGMA-ENMs, while Fig. 2b shows a diagram for the tensile strength of neat and BSA immobilized PANGMA-ENMs. As can be seen, the elastic modulus and the tensile strength of BSA immobilized PANGMA-ENM are more than three times respectively four times higher in comparison with the neat ENM.

Through the immobilization and crosslinking by BSA the nanofibers are joined at nodes (interfiber bonding) and the interpore connectivity in the web thereby the filtration capability is improved. Interfiber bonding makes the web rigid and mechanically stronger. Hence, collapsing of the pores of BSA immobilized PANGMA-ENMs is prevented and permeability of the membrane is preserved at a high level (see Fig. 3).

Fig. 3 shows schematically the measured water flux for the neat ENM and the BSA immobilized PANGMA-ENM, wherein the water flux of the BSA immobilized PANGMA-ENM is enhanced in comparison to the water flux of the neat PANGMA-ENM. Therefore, a longer life span of BSA immobilized PANGMA-ENM without any need to replacement of the membrane and lower energy consumption due to an intact highly porous structure for the membrane is achieved and leads further to a lower required feed pressure.

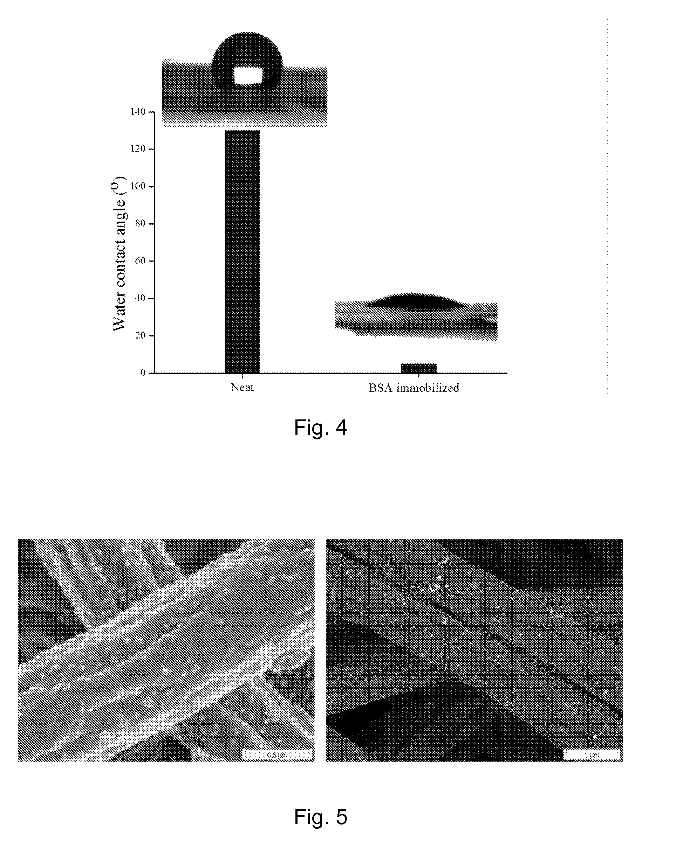

In addition, the unreacted epoxides of the PANGMA graft chains can react with water easily so that the BSA immobilized electrospun nanofibrous membrane is provided as a superhydrophilic membrane with lowered fouling tendency. Fig. 4 shows a diagram of the water contact angle of the ENM and the BSA immobilized PANGMA-ENM. As can be seen from Fig. 4 the water contact angle of BSA immobilized PANGMA-ENM is lower than the water contact angle of the neat ENM.

Fig. 5 shows scanning electron microscopy (SEM) images of metal-polymer hybrid nanofibers obtained through nanofluid filtration using the functionalized PANGMA ENMs, i.e. a BSA immobilized PANGMA-ENM.

After filtration under the use of BSA immobilized PANGMA-ENM in a filtration process with a metal containing nanofluid to be filtered which contains nanoparticles (of gold) with a size below 100 nm, the metal nanoparticles of the nanofluid to be filtered are adsorbed to the surface of the functionalized nanofibers, whereby a metal-polymer hybrid nanofibrous membrane results from the used BSA immobilized PANGMA-ENM for the filtration.

Such a hybrid nanostructure of the achieved metal-polymer hybrid nanofibrous membrane is applicable in various applications depending on the functionality of the metal nanoparticles. For example, filtration of a metal nanoparticle containing nanofluid through the functionalized ENM leads to another class of functionalized ENM suitable for further catalytic, antibacterial, photonic and electronic applications.

For instance within the scope of the invention the hybrid nanostructure of the metal-polymer hybrid nanofibrous membrane can be used in water filtration, where the metal-polymer hybrid nanofibrous membrane, based on BSA immobilized PANGMA-ENM, is applicable as for example a pre-filter in order to minimize the risk of fouling of second (following) ultrafiltration and/or nanofiltration membranes. This leads to a longer life span, lower energy consumption of the installation and lower environmental impact.

All named characteristics, including those taken from the drawings alone, and individual characteristics, which are disclosed in combination with other characteristics, are considered alone and in combination as important to the invention. Embodiments according to the invention can be fulfilled through individual characteristics or a combination of several characteristics.

## Claims

1. A membrane for the microfiltration or ultrafiltration of liquid fluids, in particular for the microfiltration or ultrafiltration of water or for the filtration of nanoparticles containing fluids, **characterized in that** the membrane comprises, in particular electrospun, nanofibers, wherein the nanofibers are functionalized with proteins.

2. The membrane according to claim 1, **characterized in that** the nanofibers are provided with, in particular metal or ceramic or polymeric, nanoparticles with a size below 250 nm (nanometers), in particular below 100 nm (nanometers), on the surface of the nanofibers.

3. The membrane according to claim 2, **characterized in that** the nanoparticles are gold (Au) nanoparticles.

4. The membrane according to any of the claims 1 to 3, **characterized in that** the nanofibers are immobilized by the, in particular cross-linking, proteins.

5. The membrane to any of the claims 1 to 4, **characterized in that** the nanofibers are made of Poly(acrylonitrile-co-glycidyl methacrylate) (PANGMA).

6. The membrane to any of the claims 1 to 5, **characterized in that** the proteins are serum albumin proteins, in particular bovine serum albumin (BSA).

7. The membrane according to any of the claims 1 to 5, **characterized in that** the diameter, in particular the average diameter, of the nanofibers is between 50 nm and 800 nm, in particular between 100 nm to 650 nm.

8. A method for producing a membrane for the microfiltration or ultrafiltration of liquid fluids, in particular for the microfiltration or ultrafiltration of water or for the filtration of nanoparticles containing fluids, with the following steps:
a) providing a polymer solution comprising at least one polymer,
b) producing electrospun nanofibers by the use of an electrospinning device on the basis of the polymer solution
c) producing a membrane, in particular a material selective layer of the microfiltration or ultrafiltration membrane, from the electrospun nanofibers
d) functionalizing the nanofibers of the membrane with proteins.

9. The method according to claim 8, **characterized in that** the nanofibers are provided with, in particular metal or ceramic or polymeric, nanoparticles with a size below 250 nm (nanometers), in particular below 100 nm, on the surface of the nanofibers, wherein in particular the nanoparticles are gold (Au) nanoparticles.

10. The method according to claim 8 or 9, **characterized in that** the polymer solution for the electrospinning process comprises one, in particular aprotic, solvent, in particular Dimethylformamide (DMF), and one polymer, in particular Poly(acrylonitrile-co-glycidyl methacrylate) (PANGMA), wherein in particular the concentration of the polymer in the polymer solution is between 5 wt % (weight %) and 50 wt %.

11. The method according to any of the claims 8 to 10, **characterized in that** for functionalization of the nanofibers of the membrane the membrane is immersed into a protein containing buffer solution, in particular a serum albumin protein buffer solution or a bovine serum albumin (BSA) buffer solution, wherein in particular the buffer solution contains phosphate buffered saline (PBS).

12. The method according to claim 11, **characterized in that** the membrane is immersed into a protein containing buffer solution for a duration of at least 1 hour, in particular for a duration between 1 h and at least 36 h, wherein afterwards the membrane is washed with a washing solution, in particular phosphate buffered saline (PBS) containing buffer solution and/or water, in particular deionized water.

13. The method according to claim 12, **characterized in that** after washing the membrane the protein functionalized membrane is dried, in particular for at least 1 hour (1 h), further in particular between 1 h and at least 36 h, and in particular at a temperature between 20°C and 50°C.

14. Use of a microfiltration or ultrafiltration membrane of liquid fluids, in particular for the microfiltration or ultrafiltration of water or for the filtration of nanoparticles containing fluids, with a membrane according to the claims 1 to 7 and/or a membrane obtainable according to the claims 8 to 13.
